# EUROPÄISCHE PATENTANMELDUNG

(11) **EP 0 524 479 A1**
(43) Veröffentlichungstag der Anmeldung: **27.01.1993**
(21) Anmeldenummer: 92111483.1
(22) Anmeldetag: 07.07.1992
(51) Int. Cl.: G01B 11/24

(54) **Messzelle zur Vermessung von Leitungen**

(30) Priorität: 20.07.1991 DE 4124174
(71) Anmelder: AICON - INDUSTRIEPHOTOGRAMMETRIE UND BILDVERARBEITUNG GmbH, D-38106 Braunschweig (DE)
(72) Erfinder: Schneider, Carl-Thomas, W-3300 Braunschweig (DE); Sinnreich, Kurt, W-3300 Braunschweig (DE)
(74) Vertreter: Gramm, Werner, Prof., Dipl.-Ing.

(57) **Zusammenfassung**

Die Erfindung betrifft eine Meßzelle zur dreidimensionalen berührungslosen Messung von Leitungen mit unterschiedlichen Biegewinkeln, insbesondere dünnen und elastischen Leitungen wie z. B. Bremsleitungen für Kraftfahrzeuge. Um insbesondere eine Verformung der zu vermessenden Leitung zu vermeiden, werden erfindungsgemäß folgende Merkmale vorgeschlagen:
a) ein elastisches Auflagebett zur Aufnahme der zu vermessenden Leitung;
b) das Auflagebett besteht aus einem grobmaschigen Netz aus Gummifäden (Gumminetz), deren Durchmesser erheblich dünner ist als der kleinste Durchmesser der zu vermessenden Leitungen;
c) mehrere in einem Dreikoordinatensystem fest installierte und hinsichtlich ihrer Position genau bestimmte CCD-Kameras, die zusammen das Meßvolumen erfassen;
d) hochgenau vermessene Referenzpunkte innerhalb des Meßvolumens;
e) ein Steuerrechner.

## Beschreibung

Die Erfindung betrifft eine Meßzelle zur dreidimensionalen berührungslosen Vermessung von Leitungen mit unterschiedlichen Biegewinkeln, mit einer Aufnahme für die zu vermessende Leitung, mehreren in einem Koordinatensystem fest installierten und hinsichtlich ihrer Position genau bestimmten CCD-Kameras, die zusammen das Meßvolumen erfassen, in dem hochgenau vermessene Referenzpunkte vorgesehen sind, und mit einem Steuerrechner.

Eine derartige Ausführungsform läßt sich der DE 40 09 144 A1 entnehmen. Diese Vorveröffentlichung offenbart ein Verfahren und eine Vorrichtung zum schnellen, automatischen und berührungslosen Vermessen der Abmessungen von dreidimensionalen Gegenständen komplizierter Konfiguration wie z. B. bei der Herstellung von Rohrteilen der Auspuff- und Bremssysteme von Kraftfahrzeugen, die unregelmäßig gebogen sind, und bei denen die genauen Abmessungen, Torsionswinkel, Biegungswinkel und die Länge der zwischen den aufeinanderfolgenden Biegungen liegenden linearen Abschnitte für die Qualitätskontrolle und Zwecke der Maschineneinstellung bekannt sein müssen.

Bei diesem vorbekannten Verfahren wird der zu vermessende Gegenstand vor einer Hintergrundebene des Meßfeldes angeordnet. Die Bilder dieses Gegenstandes werden mit optischen Abbildungseinheiten aufgenommen und dann digitalisiert in Speichern unter entsprechenden Adressen gespeichert. Aus diesen Speicheradressen werden mit einem Computer die Abmessungen der Bilder und unter Zuhilfenahme der letzteren aufgrund von an sich bekannten optischen Abbildungsgesetzen die eigentlichen Abmessungen des Gegenstandes bestimmt. Die relative Position der Hintergrundebene des Meßfeldes zu den optischen Abbildungseinheiten oder Detektoren kann mit auf der Hintergrundebene angegebenen Referenzpunkten bestimmt werden; damit werden die Bilder dann aneinander angepaßt. Die Vorrichtung zur Durchführung dieses vorbekannten Verfahrens ist mit einem Meßfeld, einem optischen Meßsystem und einer Datenverarbeitungseinheit ausgebildet. Die Aufnahme für den zu vermessenden Gegenstand, z. B. ein mehrfach gebogenes Rohr, besteht aus einzelnen im Abstand voneinander angeordneten lotrechten Haltern unterschiedlicher Höhe, deren freie Enden gemeinsam eine der Kontur des zu vermessenden Gegenstandes angepaßte Auflagefläche bilden. Der Gegenstand wird beleuchtet, und seine Bilder werden mit zumindest zwei, vorzugsweise aber mit mindestens drei optischen Abbildungseinheiten und Detektoren von mehreren Richtungen aufgenommen und zwar vorzugsweise mit hinsichtlich ihrer Position genau bestimmten CCD-Kameras.

Ein besonderes Problem stellt sich allerdings dann, wenn die zu vermessenden Gegenstände so elastisch sind, daß sie sich bei ihrer Auflage auf der genannten Aufnahme, einem Meßtisch oder dergleichen bereits unter ihrem Eigengewicht verformen.

Der Erfindung liegt somit die Aufgabe zugrunde, die eingangs beschriebene Meßzelle so weiterzuentwickeln, daß sich mit ihr insbesondere hochbiegeelastische Leitungen in kurzen Meßzeiten exakt vermessen lassen.

Diese Aufgabe wird erfindungsgemäß dadurch gelöst, daß die Aufnahme insbesondere für dünne und elastische Leitungen wie z. B. Bremsleitungen für Kraftfahrzeuge ein elastisches Auflagebett ist, das aus einem grobmaschigen Netz aus Gummifäden (Gumminetz) besteht, deren Durchmesser erheblich dünner ist als der kleinste Durchmesser der zu vermessenden Leitungen.

Die Verwendung hochauflösender CCD-Kameras zur Erfassung der Leitung ermöglicht deren berührungslose Erfassung, vermeidet eine elastische Verformung der Leitung durch den Sensor und ermöglicht eine schnelle Erfassung der Leitung sowie eine schnelle Auswertung durch digitale Bildverarbeitung.

Die zu vermessende Leitung wird von mehreren, vorzugsweise sechs CCD-Kameras gleichzeitig erfaßt und in den von den Kameras gelieferten Graubildern automatisch erkannt. Die relevanten Merkmale werden extrahiert; aus diesen Bildinformationen wird dann die räumliche Form der Leitung berechnet. Dabei erhält man zunächst dreidimensionale Koordinaten der Biegepunkte, aus denen sich die Länge der geraden Leitungsabschnitte sowie die Biegewinkel berechnen lassen. Auf dem Bildschirm erscheint die zu vermessende Leitung als schwarzes Polygon. Die Bilder der einzelnen Kameras werden abgespeichert. Auf dem Bild wird die Mittelachse der zu vermessenden Leitung gesucht in dem man um den Meßpunkt, der auf der Achse liegt, einen Kreisbereich legt und die Übergangspunkte grau/schwarz festhält und mittelt. Soweit die Meßpunkte auf einer Geraden liegen, wird diese abgefahren und so der Schnittpunkt im Bereich der ersten Biegung ermittelt. Als Information erhält man dadurch den Winkel in der Horizontalebene zwischen zwei Leitungsabschnitten, ferner den Winkel, den der abgeknickte Leitungszweig mit der Horizontalen einschließt und schließlich die wahre Länge zwischen zwei Knickpunkten.

Dabei geht man aus von einem Dreikoordinatensystem, in dem die Position der einzelnen Kameras genau bestimmt ist durch Koordinaten des Projektionszentrums.

Hochgenau vermessene Referenzpunkte innerhalb des Meßvolumens ermöglichen eine Selbstkalibrierung des Gesamtsystems.

Um jede Verformung der zu ihrer Vermessung auf das Auflagebett aufgelegten Leitung zu vermeiden, ist eine hochelastische Teilehalterung vorgesehen, die sich exakt der Leitungsform anpaßt. Ein wesentlicher Vorteil der erfindungsgemäßen Ausführungsform ist darin zu sehen, daß die zu vermessende Leitung in praktisch beliebiger Position auf das Auflagebett aufgelegt werden kann. Wesentlich ist allein, daß die zu vermessende Leitung aufgrund ihres Eigengewichtes die von ihr beaufschlagten Gummifäden soweit nach unten durchdrückt bzw. auslenkt, daß die Leitung praktisch an allen wesentlichen Punkten auf einem Gummifaden aufliegt.

Die Gummifäden sollen nicht nur hochelastisch sondern möglichst dünn sein, damit sie sich in den Kameras nicht abbilden. Insbesondere bei einer Belichtung von unten ist es wesentlich, daß der Durchmesser der Gummifäden erheblich dünner ist als der der zu vermessenden Leitung. Wichtig ist ferner, daß die Kreuzungspunkte der Gummifäden fixiert sind beispielsweise durch Verknotung.

Bei dem Gumminetz wäre ein zu enger Maschenabstand nachteilig, da kurze, scharf abgeknickte Leitungsabschnitte nicht eintauchen könnten. Als besonders geeignet hat sich eine Maschengröße des Gumminetzes in der Größenordnung von 10 x 10 cm erwiesen.

Bremsleitungen weisen häufig kurze Endstücke auf, die in einem Winkel > 90° abgekröpft sind, eine Anschlußmutter aufweisen und daher nur schwer zu vermessen sind. Bei Verwendung einer erfindungsgemäßen Meßzelle läßt sich das Problem in einfacher Weise lösen durch Anbringung eines Adapters, mit dem das kurze abgeknickte Endstück verlängert wird, so daß eine einwandfreie Vermessung erfolgen kann und zwar durch Rückrechnung auf die bekannte tatsächliche Länge.

In der Meßzelle lassen sich z. B. Hydraulikleitungen für den Flugzeugbau vermessen. Diese Hydraulikleitungen weisen einen erheblich größeren Reflektionsgrad an ihrer Oberfläche auf und lassen sich daher nicht in der vorstehend beschriebenen Weise abbilden. Hierfür wird dann zweckmäßig ein unterhalb des Auflagebettes und in lichtem Abstand hierzu angeordneter Beleuchtungstisch vorgesehen, über dem die CCD-Kameras angeordnet sind. Die Leitungen bilden sich in den Kameras dann als Schattenriß ab. Bezogen auf die Aufnahmeseite gibt es keine Oberflächenreflektion.

Mit der neuen Meßzelle läßt sich eine Leitung in einem Zyklus von etwa einer Minute exakt vermessen.

In der Zeichnung ist eine als Beispiel dienende Ausführungsform der Erfindung dargestellt. Es zeigen:
- **Figur 1 -**: in schaubildlicher Darstellung eine Meßzelle;
- **Figur 2 -**: Beispiele für zu vermessende Leitungen und
- **Figur 3 -**: ein Beispiel für die Berechnung der räumlichen Form der Leitung aus Bildinformationen.

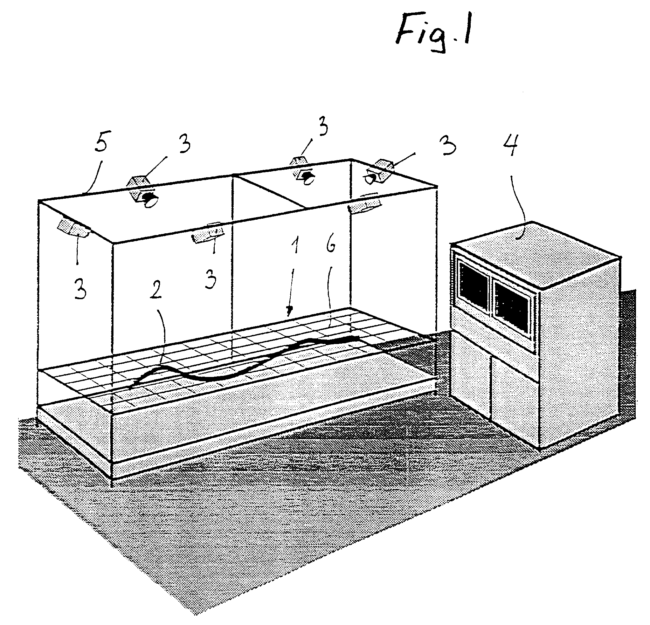

**Figur 1** zeigt in schematischer Darstellung eine Meßzelle mit einem elastischen Auflagebett 1 zur Aufnahme der zu vermessenden Leitung 2, sechs CCD-Kameras 3 und einem Steuerrechner 4.

Die CCD-Kameras 3 sind in dem Ausführungsbeispiel an einem Gestell 5 oberhalb des elastischen Auflagebettes 1 fest installiert und hinsichtlich ihrer Position genau bestimmt. Die CCD-Kameras 3 sind so ausgerichtet, daß sie zusammen die durch das Auflagebett 1 definierte Ebene erfassen und mit ihrer optischen Achse zu dieser Ebene unter einem Winkel < 90° geneigt sind.

Die schematische Darstellung in **Figur 1** läßt erkennen, daß das elastische Auflagebett 1 aus einem grobmaschigen Netz besteht, das aus Gummifäden 6 geknüpft ist, deren Durchmesser sehr viel kleiner ist als der der zu vermessenden Leitung 2. Die Elastizität der Gummifäden 6 sowie die Größe der von ihnen gebildeten Maschen werden so gewählt, daß die zu vermessende, auf das Auflagebett aufgelegt Leitung 2 unter ihrem Eigengewicht die Gummifäden 6 soweit nach unten durchdrückt, daß die Leitung 2 über ihre volle Länge auf dem Gumminetz aufliegt also von den Gummifäden 6 abgestützt ist. Dadurch wird eine Verformung der Leitung 2 verhindert.

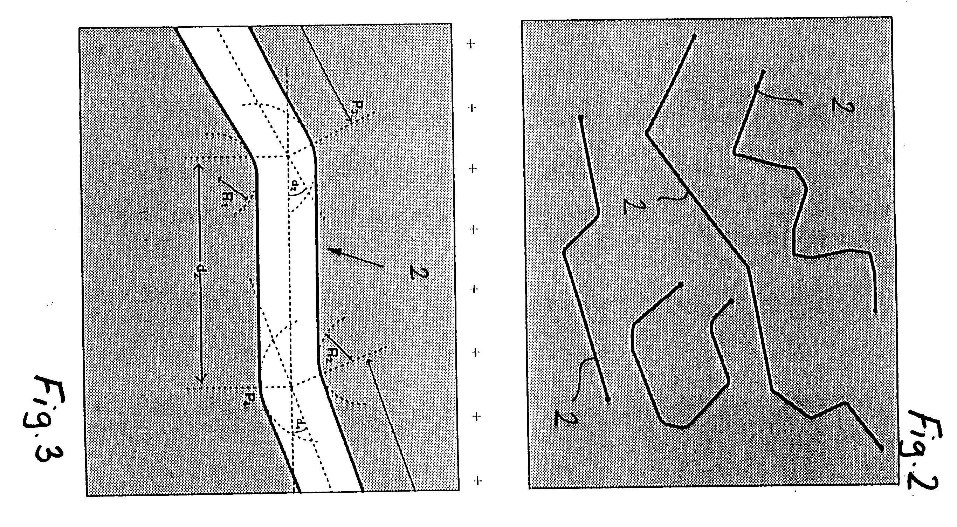

**Figur 2** zeigt Beispiele für zu vermessende Leitungen 2, die unterschiedliche Radien aufweisen und sich aus geraden Abschnitten und Biegungen zusammensetzen.

Die zu vermessende Leitung 2 kann in praktisch beliebiger Position auf das elastische Auflagebett 1 gelegt werden. Die Leitung wird dann von den 6 CCD-Kameras 3 gleichzeitig erfaßt und in den von den Kameras gelieferten Graubildern automatisch erkannt. Die relevanten Merkmale werden extrahiert; aus diesen Bildinformationen wird dann die räumliche Form der Leitung berechnet. Dabei erhält man zunächst dreidimensionale Koordinaten der Biegepunkte, aus denen sich die Länge der Geradenelemente sowie die Biegewinkel berechnen lassen. Dies wird in **Figur 3** veranschaulicht.

Hochgenau vermessene Referenzpunkte innerhalb des Meßvolumens ermöglichen eine selbstkalibrierung des Gesamtsystems. Diese Referenzpunkte sind in **Figur 1** nicht dargestellt, können sich aber z. B. auf dem äußeren Rand des elastischen Auflagebettes 1 und/oder auf einer Fläche unterhalb dieses Auflagebettes befinden.

## Patentansprüche

1. Meßzelle zur dreidimensionalen berührungslosen Vermessung von Leitungen mit unterschiedlichen Biegewinkeln, mit einer Aufnahme für die zu vermessende Leitung (2), mehreren in einem Koordinatensystem fest installierten und hinsichtlich ihrer Position genau bestimmten CCD-Kameras (3), die zusammen das Meßvolumen erfassen, in dem hochgenau vermessene Referenzpunkte vorgesehen sind, und mit einem Steuerrechner (4), **dadurch gekennzeichnet**, daß die Aufnahme insbesondere für dünne und elastische Leitungen wie z. B. Bremsleitungen für Kraftfahrzeuge ein elastisches Auflagebett (1) ist, das aus einem grobmaschigen Netz aus Gummifäden (6) (Gumminetz) besteht, deren Durchmesser erheblich dünner ist als der kleinste Durchmesser der zu vermessenden Leitungen (2).

2. Meßzelle nach Anspruch 1, **dadurch gekennzeichnet**, daß die Maschengröße des Gumminetzes etwa 10 x 10 cm beträgt.

3. Meßzelle nach Anspruch 1 oder 2, **dadurch gekennzeichnet**, daß die Kreuzungspunkte der Gummifäden (6) fixiert sind beispielsweise durch Verknüpfung.

4. Meßzelle nach Anspruch 1, 2 oder 3, **gekennzeichnet durch** einen unterhalb des Auflagebettes (1) und in lichtem Abstand hierzu angeordnetem Beleuchtungstisch, über dem die CCD-Kameras (3) angeordnet sind.
